(19) Europäisches Patentamt
European Patent Office
Office européen des brevets

(11) **EP 2 597 509 A1**

(12) **EUROPÄISCHE PATENTANMELDUNG**

(43) Veröffentlichungstag:
**29.05.2013 Patentblatt 2013/22**

(51) Int Cl.:
**G02F 1/13** *(2006.01)* **G02F 1/315** *(2006.01)*
**G02F 1/1343** *(2006.01)*

(21) Anmeldenummer: **11190046.0**

(22) Anmeldetag: **22.11.2011**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Philipps-Universität Marburg**
**35037 Marburg (DE)**

(72) Erfinder:
• **Koch, Martin**
**35274 Kirchhain (DE)**

• **Dr. Jansen, Christian**
**38110 Braunschweig (DE)**
• **Vieweg, Nico**
**35037 Marburg (DE)**
• **Scherger, Benedikt**
**35041 Marburg (DE)**

(74) Vertreter: **Stumpf, Peter**
**c/o TransMIT GmbH**
**Kerkrader Strasse 3**
**35394 Gießen (DE)**

(54) **Modulator für elektromagnetische Wellen**

(57) Mit der vorliegenden Erfindung wird ein Modulator vorgestellt, welcher sich kostengünstig realisieren lässt, verlustärmer arbeitet als bisherige Modulatoren, EM-Wellen jeder Polarisation mit einem hohen Modulationsgrad moduliert und dessen Baukonzept für ein breites Frequenzspektrum von Mikrowellen bis hin zum weichen UV einsetzbar ist. Hierbei erfolgt die Modulation durch die Reflexion der elektromagnetischen Welle oder eines Teils der elektromagnetischen Welle an einer Grenzschicht zwischen einem Medium mit konstanten Brechungsindex und einem Medium mit einem variablen Brechungsindex. Insbesondere wird das Schalten zwischen einem Zustand der Totalreflexion und einem Zustand, bei dem keine Totalreflexion vorliegt ausgenutzt.

Fig. 5

EP 2 597 509 A1

**Beschreibung**

Mit der vorliegenden Erfindung wird ein Modulator vorgestellt, welcher sich kostengünstig realisieren lässt, verlustärmer arbeitet als bisherige Modulatoren, elektromagnetische (EM)-Wellen jeder Polarisation mit einem hohen Modulationsgrad moduliert und dessen Baukonzept für ein breites Frequenzspektrum von Mikrowellen bis hin zur weichen Ultraviolettstrahlung (UV) einsetzbar ist.

**Beschreibung**

**Stand der Technik**

Modulatoren für EM-Wellen werden heute in vielen Bereichen, beispielsweise in der Metrologie, der Medizintechnik, der industriellen Prozessüberwachung, in der Kommunikationstechnik aber auch im Multimediabereich genutzt. Generell wird zwischen Modulatoren für geführte und im Freiraum propagierende Wellen unterschieden. Zumindest im optischen Frequenzbereich stehen beispielsweise für in Glasfasern oder optischen Wellenleitern geführte Wellen effiziente Modulatoren in Form von Mach-Zehnder-Interferometern oder Pockels-Zellen zur Verfügung. Bekannte Freistrahlmodulatoren haben jedoch die Nachteile, dass sie EM-Wellen stark absorbieren, einen geringen Modulationsgrad aufweisen oder nur für einen bestimmten Frequenzbereich geeignet sind. Insbesondere für EM-Wellen mit Frequenzen im Terahertzfrequenzbereich gibt es bisher noch keine zufriedenstellenden Lösungen. Zudem sind Modulatoren gemäß dem Stand der Technik vergleichsweise aufwendig in der Herstellung oder benötigen zusätzliche Elemente wie Polarisationsfilter, was sich in einem höheren Preis der Bauteile widerspiegelt.

Es gibt bisher individuelle Lösungen für die verschiedenen Frequenzbereiche des EM-Spektrums. Dazu gehören beispielsweise:

- LCDs (Liquid Crystal Display) in Videoprojektoren (für sichtbares Licht)
- Mikrospiegelaktoren (engl. digital light processing, DLP oder micro-electromechanical systems MEMS)
- Pockels-Zellen, für Laser mit hohem Polarisationsgrad

Mit der Pockels-Zelle kann die Polarisationsebene einer EM-Welle abhängig von einer an die Zelle angelegten Spannung gedreht werden. In Kombination mit einem nachgeschalteten Polarisator kann die EM-Welle in Abhängigkeit der Zellspannung beeinflusst werden. Pockels-Zellen werden z.B. zur Modulation von Laserstrahlen verwendet. Der Einsatzbereich dieser Bauteile ist aber auf monochromatische und polarisierte EM-Wellen im optischen Frequenzbereich beschränkt.

In Videoprojektoren werden z.B. DLPs eingesetzt. Diese Modulatoren sind sehr aufwendig zu fertigende mikromechanische Bauteile, die derzeit vorwiegend im optischen Frequenzbereich eingesetzt werden.

Eine Alternative zu DLPs sind in Transmission betriebene LCD-Chips. Allerdings bieten Projektoren auf Basis von LCD-Designs schlechtere "Schwarzwerte". Es ist aus technischen Gründen sehr schwer 100% des Lichtes in LCD-Chips zu blockieren. Bei hohen Lichtleistungen und häufiger Nutzung können außerdem die in diesen Chips eingesetzten Flüssigkristalle degradieren. Dazu kommt, dass LCDbasierte Projektoren weitere Bauteile wie z.B. Polarisatoren benötigen. Darüber hinaus eignen sich die in Transmission betriebenen LCDs vorwiegend für den optischen Frequenzbereich, da Flüssigkristalle in anderen Frequenzbereichen meist sehr stark absorbieren.

Für den Terahertzfrequenzbereich existieren Modulatoren auf Halbleiterbasis. Diese Bauteile lassen sich optisch oder elektrisch variabel einstellen. Während für die optisch einstellbaren Modulatoren zusätzliche Komponenten wie z.B. Laser zusätzliche Kosten verursachen, arbeiten die elektrisch schaltbaren Bauteile nur bei einer bestimmten Frequenz). Zudem lassen sich mit den halbleiterbasierenden Elementen nur geringe Modulationsgrade erreichen.

**Aufgabe**

Die Aufgabe ist es daher eine Vorrichtung zur kostengünstigen und verlustarmen Modulation für EM-Wellen zu entwickeln, welche EM-Wellen mit jeder Polarisation mit einem hohen Modulationsgrad moduliert und für ein breites Frequenzspektrum geeignet ist. Als EM-Wellen kommen sowohl gepulste als auch Dauerstrich-Signale in Frage.

Mit der vorliegenden Erfindung sollen folgende Aufgaben erfüllt werden:

● EM-Wellen in einem breiten Frequenzband sollen verlustarm moduliert werden

● EM-Wellen mit jeder Polarisationsrichtung sollen moduliert werden

● ein hoher Modulationsgrad soll erreicht werden

Der Modulator soll sich sowohl zur Amplitudenmodulation des gesamten Strahls der EM-Welle, aber auch zur räumlichen Modulation von Teilen des Strahlengangs von EM-Wellen verwenden lassen, um potentiell anstelle von Digital Light Processing (DLP) oder Liquid Crystal Display (LCD) Chips eingesetzt werden zu können. Insbesondere für die Nutzung in bildgebenden Systemen im TerahertzFrequenzbereich fehlen bisher verlustarm arbeitende räumliche Modulatoren vollständig. Eine Kernanforderung an den Modulator ist daher, dass er auch in diesem Spektralbereich einsetzbar sein soll.

## Lösung der Aufgabe

Mit der vorliegenden Erfindung wird ein Modulator vorgestellt, welcher sich kostengünstig realisieren lässt, verlustärmer arbeitet als bisherige Modulatoren, EM-Wellen jeder Polarisation mit einem hohen Modulationsgrad moduliert und dessen Baukonzept für ein breites Frequenzspektrum von Mikrowellen bis hin zum weichen UV einsetzbar ist.

Ein solcher Modulator zur Modulation und / oder Schaltung von EM-Strahlung besteht aus mindestens zwei aneinandergrenzenden Komponenten, die somit eine Grenzschicht bilden, wobei mindestens eine erste Komponente aus einem Medium besteht, welches einen variabel-einstellbaren Brechungsindex aufweist.

Eine zweite Komponente kann z.B. einen konstanten Brechungsindex aufweisen. Beispielsweise kann die erste Komponente derart ausgeführt sein, dass der Brechungsindex mindestens in einem Zustand der Komponente die Bedingung für Totalreflexion an der Grenzschicht zwischen der ersten und zweiten Komponente erfüllt und in mindestens einem anderen Zustand der ersten Komponente diese Bedingung nicht erfüllt ist.

Totalreflexion liegt dann vor, wenn eine EM-Welle, die in einem Medium mit der Brechzahl $n_2$ propagiert auf die Grenzfläche zu einem Medium mit der Brechzahl $n_3$ trifft, wobei das Medium mit der Brechzahl $n_3$ schwächer brechend ist, und der Einfallswinkel größer ist als der kritische Winkel

$$\theta_C = \arcsin \frac{n_3}{n_2}$$

Bei verlustfreien Medien tritt in diesem Fall eine 100%-Reflexion auf. Im Kontext dieses Patentes ist mit Totalreflexion jedoch auch der Fall gemeint, dass eines oder beide Medien eine endliche Absorption aufweisen und somit nur ein kleinerer Teil der EM-Strahlung reflektiert wird.

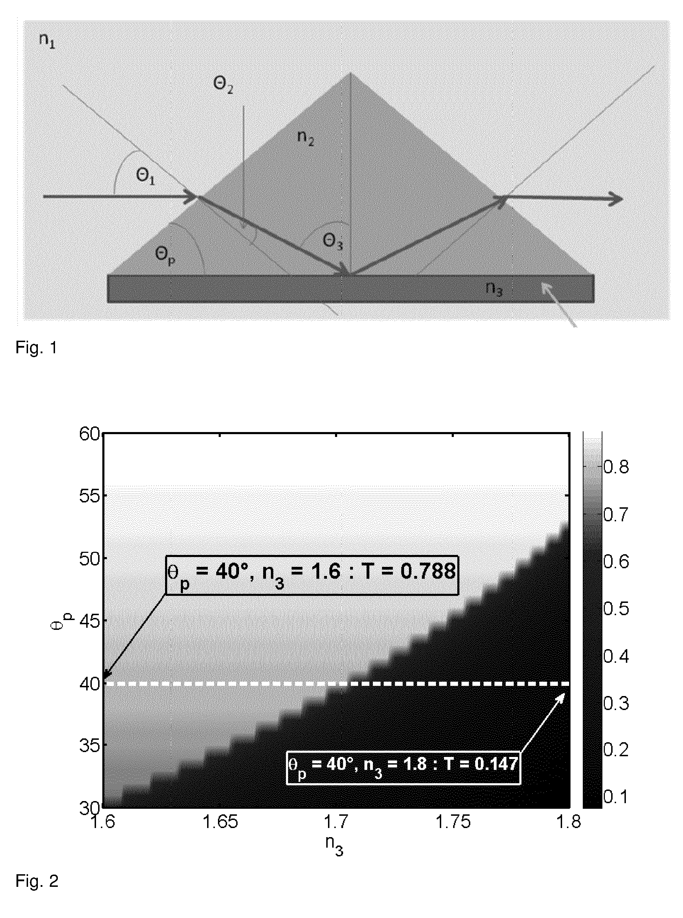

In Fig. 1 ist ein Ausführungsbeispiel des Modulators dargestellt. Hierbei ist die zweite Komponente in Form eines Prismas mit einem konstanten Brechungsindex $n_2$ dargestellt und die erste Komponente in Form einer dünnen Schicht an einer Seite des Prismas (beispielsweise an der Grundseite des Prismas), welche aus einem Medium mit einem variablen Brechungsindex $n_3$ besteht.

Aufgrund seines einfachen Aufbaus kann der Modulator erheblich günstiger hergestellt werden als z.B. DLPs, die aus einer aufwendig herzustellenden dreidimensional strukturierten Mikrospiegelanordnung bestehen. Zudem sind im Vergleich zu LCD basierten Modulatoren keine zusätzlichen Polarisationsfilter nötig, so dass sich die erfindungsgemäße Vorrichtung zur Modulation von Wellen jeglicher Polarisationszustände eignet.

Der Modulator ist besonders verlustarm, da die EM-Welle bzw. der relevante Anteil der EM-Welle nur durch eine zweite Komponente bestehend aus dem Material mit dem konstanten Brechungsindex $n_2$ propagiert und für dieses Medium verschiedene verlustarme Materialien verwendet werden können.

Zudem lassen sich Reflexionsverluste vermeiden, wenn die EM-Welle TM-polarisiert ist und unter dem Brewsterwinkel auf das Prisma fällt oder spezielle Antireflexbeschichtungen zum Einsatz kommen.

Der Modulator erreicht einen besonders hohen Modulationsgrad, weil die EM-Welle in einem Zustand des Modulators das Bauteil verlustarm durchläuft, während sie im anderen Zustand nahezu ausgelöscht wird.

Das Baukonzept ist für ein breites Frequenzspektrum geeignet, da das Material / Medium der Komponenten derart gewählt werden kann, dass diese für die jeweiligen Frequenzen besonders geeignet sind.

Für die erste Komponente mit variablem Brechungsindex ist beispielsweise ein besonders geeignetes Material / Medium eines, welches durch Veränderung des Brechungsindexes und in Kombination mit der zweiten Komponente in mindestens einem Zustand eine Totalreflexion der EM-Welle an der Grenzschicht zur zweiten Komponente ermöglicht. Darüber hinaus, ist das Material / Medium besonders geeignet, wenn im anderen Schaltzustand der Brechungsindex der ersten Komponente so verändert werden kann, dass er idealerweise dem Brechungsindex der zweiten Komponente entspricht und so keine Reflexion an der entsprechenden Grenzschicht auftritt. Für die zweite Komponente ist beispielsweise ein besonders geeignetes Material / Medium ein solches durch welches die EM-Welle im gewünschten Frequenzbereich (nahezu) verlustfrei propagiert und welches in Kombination mit der ersten Komponente eine Totalreflexion in mindestens einem Schaltzustand der ersten Komponente ermöglicht und in mindestens einem anderen Schaltzustand der Komponente verhindert.

In einem anderen Ausführungsbeispiel weisen die erste und die zweite Komponente variabel-einstellbare komplexe Brechungsindizes auf und die beiden Schaltzustände (Totalreflexion an der Grenzschicht zwischen der ersten und zweiten Komponente und einem anderen Zustand der Komponenten bei dem diese Bedingung nicht erfüllt ist) können durch Veränderung des Brechungsindex eines oder beider Materialien erzeugt werden.

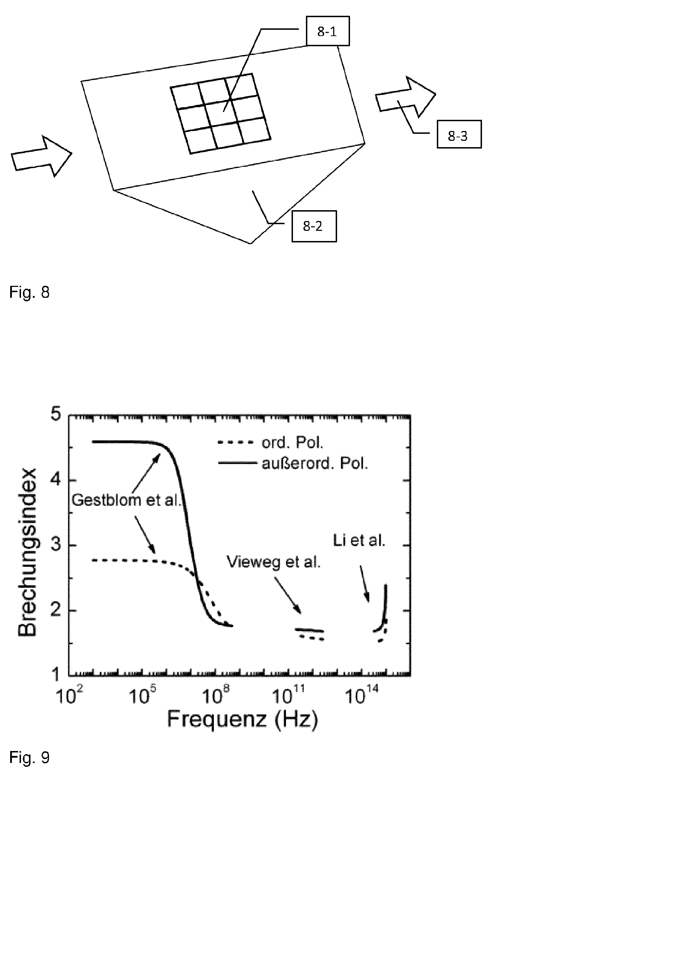

Die erste Komponente kann beispielsweise aus einem Flüssigkristall (engl. Liquid Crystal - LC) bestehen, beispielsweise in Form einer dünnen Schicht, auch als Flüssigkristallschicht bezeichnet. Die Flüssigkristallschicht kann zwischen dem Zustand der ordentlichen und außerordentlichen Polarisation eingestellt werden, wobei sich die beiden Zustände in ihrem Brechungsindex unterscheiden (vgl. Fig. 9). Die erste Komponente kann beispielsweise auch ein Ferroelektrikum und / oder ein pyroelektrisches Material aufweisen.

Die zweite Komponente kann beispielsweise aus Glas, Saphir, Quarz, einem Polymer und / oder einem Halbleiter oder teilweise aus mindestens einem dieser Materialien / Medien bestehen.

Beispielsweise kann der Modulator derart ausgeführt sein, dass dieser geeignet ist, um EM-Wellen mit Frequenzen im Terahertzbereich (beispielsweise zwischen 100 GHz und 30 THz) zu modulieren, insbesondere in einem Frequenzbereich von 100 GHz bis 5 THz. Für die Kombination aus einer zweiten Komponente in Form eines Prismas und einer ersten Komponente mit einem Flüssigkristall ist der optische Frequenzbereich ($10^{14}$-$10^{15}$ Hz) besonders bevorzugt, da in diesem Bereich sowohl Flüssigkristall als auch Prismenmaterialien nahezu verlustfrei sind.

Die wesentlichen Vorteile der vorliegenden Erfindung lassen sich durch folgende Kernmerkmale beschreiben:

● Der Modulator arbeitet verlustarm bei gleichzeitig hohem Modulationsgrad.
● Der Modulationsgrad lässt sich unter der Ausnutzung der Totalreflexion optimieren.
● Der Modulator eignet sich auch zur räumlichen Modulation von EM-Wellen. Das kann durch Vereinzelung (z.B. Pixel) und separate Ansteuerung von Teilen der ersten Komponente mit variablem Brechungsindex geschehen (Fig. 8), so dass Teilbereiche der ersten Komponente, beispielsweise in Form von Pixeln, separat einstellbar sind. Der Modulator kann deshalb anstelle von DLPs oder LCDs auch für bildgebende Verfahren eingesetzt werden.
● Die EM-Wellen müssen nicht durch die erste Komponente mit dem schaltbaren Medium ($n_3$) propagieren. Das hat insbesondere einen positiven Effekt auf die Anwendung des Modulators im THz-Frequenzbereich, da die Absorption der ersten Komponente eine untergeordnete Rolle spielt.
● Der Modulator lässt sich auch als Strahlweiche (EM-Schalter, optischer Schalter) einsetzten. Die Energie der EM-Welle wird in diesem Fall nicht einfach absorbiert oder in einer anderen Weise abgeschaltet sondern in einen anderen Pfad umgeleitet und kann weiter genutzt werden. Diese Anwendung kann z.B. im Telekommunikationsbereich zur Kanalsteuerung verwendet werden.
● Es werden keine Polarisatoren benötigt.
● Bei Verwendung eines Prismas lassen sich die Verluste unter Ausnutzung des Brewsterwinkels weiter minimieren, so dass der Modulator für transversal magnetisch (TM) polarisierte Wellen quasi verlustfrei ist.

Um die Funktionsweise des Modulators zu erläutern ist dieser in Fig. 1 mittels einer Prinzipskizze beschrieben. Der Modulator befindet sich in diesem Ausführungsbeispiel in einem Medium 1 mit dem Brechungsindex $n_1$. Das Medium 1 kann z.B. Luft sein. Der Modulator besteht in diesem Ausführungsbeispiel aus einer zweiten Komponente in der Form eines Prismas mit dem Brechungsindex $n_2$ und einer ersten Komponente mit einem variabel einstellbaren Brechungsindex $n_3$.

Die Modulation der Amplitude der aus dem Bauteil austretenden EM-Welle wird durch Variation der Reflexionseigenschaften der Grenzschicht 2-3 zwischen den beiden Medien 2 (zweite Komponente) und 3 (erste Komponente) erreicht. Der Reflexionskoeffizient der Grenzschicht 2-3 (Grenzschicht der ersten und zweiten Komponente) hat dabei einen direkten Einfluss auf die Amplitude der durch den Modulator laufenden Welle.

Der Modulator erreicht einen besonders großen Modulationsgrad, wenn der Brechungsindex der Medien so gewählt wird, dass die EM-Welle an der Grenzschicht 2-3 in einem Schaltzustand totalreflektiert wird, während die EM-Welle in einem anderen Schaltzustand nur gering oder gar nicht an der Grenzschicht 2-3 reflektiert wird.

Der Modulator arbeitet besonders verlustfrei, wenn die EM-Welle transversal magnetisch (TM) polarisiert ist und der Einfall der EM-Welle auf die Grenzfläche 1-2 (Grenzschicht zwischen Medium 1 und 2 (Medium 2 entspricht der zweiten Komponente)) im Brewster-Winkel erfolgt.

An der Austrittsstelle aus der zweiten Komponente kann die EM-Welle in ein Medium mit demselben Brechungsindex $n_1$ wie an der Eintrittsstelle in die zweite Komponente treffen oder in ein anderes Medium mit einem Brechungsindex $n_4$.

Bei der Modulation der Amplitude einer EM-Welle geschieht die Modulation aufgrund der Änderung der Reflexionseigenschaften der Grenzschicht 2-3 zwischen zwei Komponenten. An dieser Grenzschicht kommt es abhängig vom Brechungsindex des Mediums der ersten Komponente zu einer starken (Totalreflexion) oder zu keiner oder teilweisen Reflexion der EM-Welle.

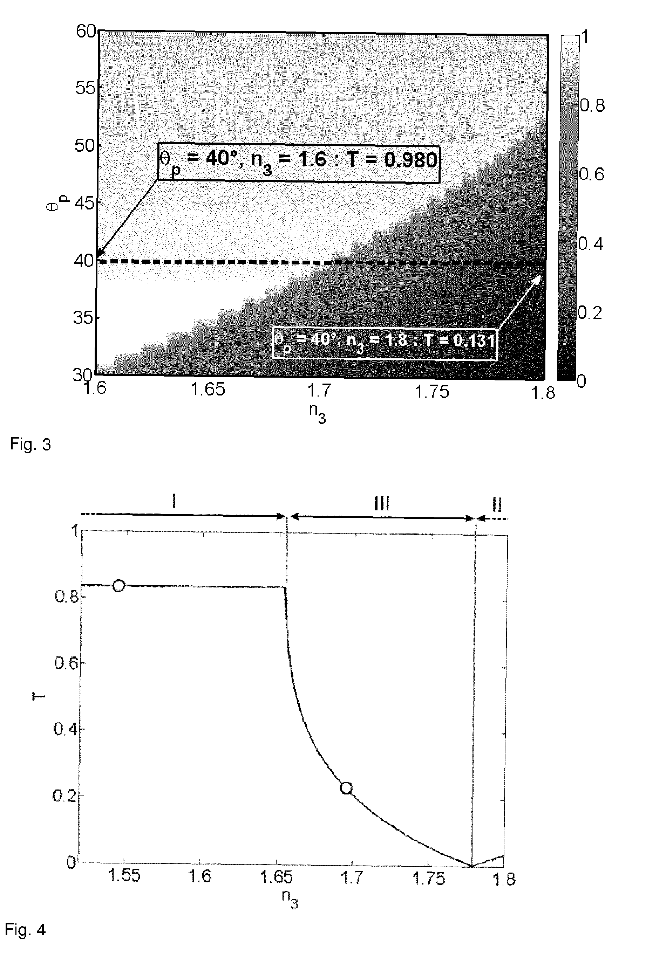

In einem Ausführungsbeispiel (Fig. 1) wird eine EM-Welle zunächst an der Luft /Prisma Grenzschicht unter dem Winkel $\Theta_1$ ins Prisma gebrochen. Anschließend trifft die EM-Welle unter dem Winkel $\Theta_3$ auf die Grenzschicht zwischen dem Prisma mit dem Brechungsindex $n_2$ (Ausführungsbeispiel der zweiten Komponente) und dem Medium mit dem variabel einstellbaren Brechungsindex $n_3$ (Ausführungsbeispiel der ersten Komponente). An der zweiten Prisma/Luft-Grenzschicht kann die EM-Welle das Prisma schließlich wieder verlassen. In den Zeichnungen Fig. 2 und Fig. 3 sind die Simulationen für ein Prisma (Ausführungsbeispiel der zweiten Komponente) mit dem Brechungsindex $n_2$=1,96 und einem Medium mit variablem Brechungsindex zwischen $n_3$=1,6 und $n_3$=1,8 (Ausführungsbeispiel der ersten Komponente) für beide Polarisationsrichtungen senkrecht (TE) (Fig. 2) und parallel (TM) (Fig. 3) zur Einfallsebene von $\Theta_3$ dargestellt. Die Simulation ist für unterschiedliche Winkel ($\Theta_p$=30° bis 60°) des Prismas berechnet worden. Dargestellt ist außerdem der Transmissionskoeffizient T für den jeweiligen Schaltzustand und für die beiden Polarisationen.

Je nach Höhe des Brechungsindexes $n_3$ lassen sich drei Fälle unterscheiden:

Fall 1: die EM-Welle wird an der Grenzschicht 2-3 (Grenzschicht der ersten und zweiten Komponente) totalreflektiert (heller Bereich in Fig. 2 und Fig. 3) und propagiert verlustarm durch das Prisma (zweite Komponente).
Fall 2: der größte Teil der Energie wird in das Medium 3 gebrochen (dunkler Bereich in Fig. 2 und Fig. 3). Somit wird die Amplitude der EM-Welle am Ausgang des Bauteils minimal.
Fall 3: Übergang zwischen hellem und dunklem Bereich: ein bestimmter Teil der Welle wird an der Grenzschicht 2-3 reflektiert, der andere Teil der Welle wird ins Medium 3 gebrochen. In Fig. 4 ist dieser Übergang explizit dargestellt.

Die entsprechenden Bereiche für Fall 1 (I), 2 (II) und 3 (III) sind in Fig. 4 gekennzeichnet.

In Fig. 4 ist das Schaltverhalten eines Ausführungsbeispiels dargestellt. In diesem Ausführungsbeispiel wurde ein TE polarisierter HeNe-Laser mit einer Wellenlänge von 632,8 nm verwendet. Als zweite Komponente diente ein Glasprisma mit einem Winkel $\Theta_p=45°$. Das Prisma besteht aus SF11 Glas mit einem Brechungsindex von $n_2=1,779$. Als erste Komponente wird der Flüssigkristall 5CB verwendet. Der Brechungsindex des Flüssigkristalls lässt sich prinzipiell zwischen n=1,53 (ordentliche Polarisation) und n=1,71 (außerordentliche Polarisation) schalten. Das Diagramm in Fig. 4 zeigt dieses Schaltverhalten. Der auf der y-Achse aufgetragene Transmissionskoeffizient T ist ein Maß für die Amplitude der EM-Welle am Ausgang des Prismas. Die durchgezogene Linie kennzeichnet die Berechnung und die Punkte / Kreise stellen die Messwerte dar. Unterhalb des Brechungsindexes $n_3=1,654$ wird die EM-Welle an der Grenzschicht 2-3 totalreflektiert und die Amplitude der EM-Welle am Ausgang des Modulators ist maximal. Oberhalb des Brechungsindexes $n_3=1,654$ tritt keine Totalreflexion mehr auf und die Amplitude der EM-Welle am Ausgang des Prismas nimmt mit zunehmendem Brechungsindex $n_3$ ab.

Die geometrische Ausführung der ersten und zweiten Komponente ist nur beispielhaft und kann durch geeignete andere Formen ersetzt werden, solange die EM-Welle an der Grenzschicht 2-3 (Grenzschicht der ersten und zweiten Komponente) reflektiert werden kann. In weiteren Ausführungsbeispielen kann mindestens eine Seite der Komponenten als Quadrat, Rechteck, Raute, Rhombus oder Vielecke ausgeführt sein. Weiterhin kann die zweite Komponente in Form einer Hemisphäre, Hyperhemisphäre, Halbkugel, Teilzylinders, Quaders, Zylinders oder, wie im Beispiel gezeigt, eines Prismas ausgeführt sein. Wobei jeweils mindestens ein Teil der Form an eine erste Komponente mit variablem Brechungsindex grenzt.

Die erste Komponente mit dem Medium mit dem Brechungsindex $n_3$ kann z.B. ein Flüssigkristall, ein Ferroelektrikum, ein Pyroelektrikum oder ein anderer Stoff sein, dessen Brechungsindex sich variabel verändern lässt.

Der Brechungsindex der ersten Komponente und / oder weiterer Komponenten mit variabel-einstellbarem komplexen Brechungsindex kann elektrisch und / oder optisch und / oder magnetisch und / oder elektro-magnetisch und / oder mechanisch und / oder thermisch und / oder akustisch und / oder biologisch schaltbar bzw. variabel einstellbar sein.

Beispielsweise könnte die Änderung des Brechungsindexes $n_3$ unter Einwirkung elektrischer oder magnetischer Felder bzw. durch EM-Wellen oder durch mechanische Kräfte geschehen. Mit dem variabel einstellbaren Brechungsindex $n_3$ der ersten Komponente lassen sich die Eigenschaften (Reflexionskoeffizient) der Grenzschicht 2-3 verändern.

Im Folgenden wird anhand des Flüssigkristalls beschrieben wie sich der Brechungsindex variabel einstellen lässt:

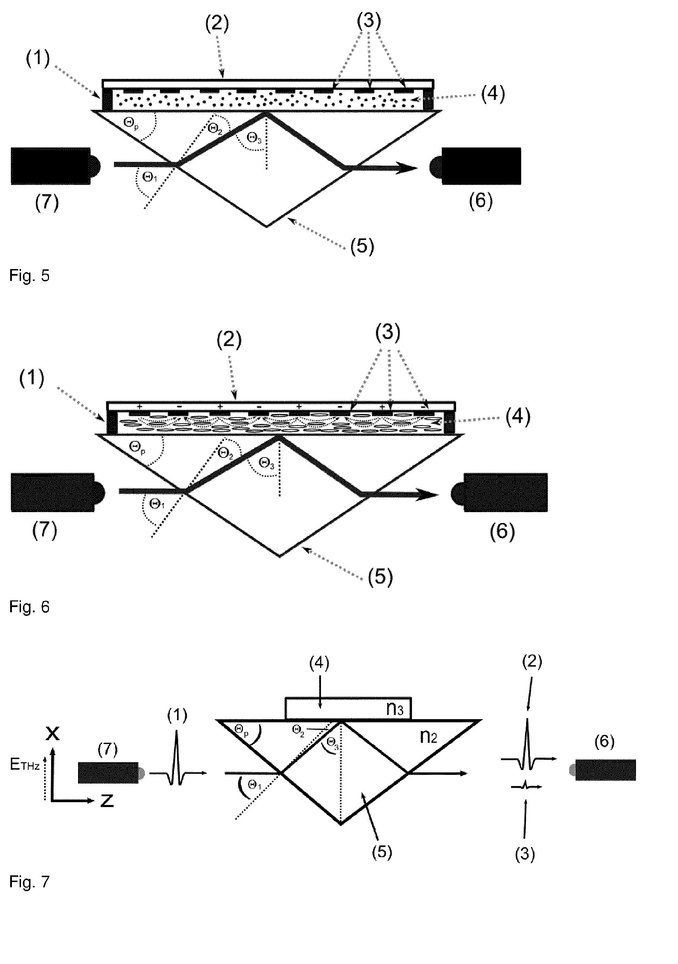

Der Brechungsindex, den die EM-Welle erfährt, wenn sie auf die Flüssigkristallschicht einfällt, lässt sich über die Orientierung der Moleküle des Flüssigkristalls steuern. Der Flüssigkristall besteht aus nanometerlangen stäbchenförmigen Molekülen. Die Orientierung der Stäbchen lässt sich beispielsweise mit elektrischen oder magnetischen Feldern, optisch oder über die Temperatur beeinflussen. Bevorzugt wird bei Flüssigkristallbauteilen jedoch das elektrische Schalten, wie es bei dem im Handel erhältlichen Flachbildschirmen (liquid crystal displays - LCDs) ebenfalls der Fall ist. In einem Ausführungsbeispiel des Modulators erfolgt die Ansteuerung ebenfalls elektrisch. Hierzu kann man an der ersten Komponente beispielsweise Elektroden anbringen. Bei der in Fig. 5 dargestellten Ausführungsform können diese Elektroden wie z.B. bei Flüssigkristallbildschirmen üblich entsprechend des IPS-Designs (engl. Inplane-Switching) angeordnet sein. Hierbei handelt es sich um Streifenelektroden zwischen denen paarweise ein sogenanntes Inplane-Feld erzeugt werden kann. Im Ausgangszustand besitzen die Flüssigkristallmoleküle bereits eine Vororientierung z.B. durch Polymerstabilisierung. In einem Ausführungsbeispiel des Modulators zeigen die Moleküle im Ausgangszustand zunächst in Richtung der Bildebene (Fig. 5). Nach Anlegen eines elektrischen Gleich- und / oder Wechselfeldes zwischen den Streifen richten sich die Moleküle wie in Fig. 6 gezeigt parallel zur Bildebene aus.

Fig. 7 zeigt eine Prinzipskizze eines weiteren Ausführungsbeispiels wobei der Modulator in einem THz-System, beispielsweise in einem Terahertz-Spektrometer, verwendet wird. Zunächst wird der Brechungsindex der ersten Komponente, in diesem Beispiel des Flüssigkristalls, so eingestellt, dass die THz-Welle an der Grenzschicht zwischen Prisma (Ausführungsbeispiel der zweiten Komponenten) und dem Flüssigkristall (Ausführungsbeispiel der ersten Komponente) totalreflektiert wird (Zustand 1). Der Brechungsindex der Flüssigkristallschicht ist in Zustand 1 idealerweise viel kleiner als der Brechungsindex des Prismas. So erreicht der THz-Puls den Detektor mit maximal möglicher Amplitude. Im Gegensatz dazu ist im Zustand 2 der Brechungsindex des Flüssigkristalls so geschaltet, dass die THz-Welle nicht mehr totalreflektiert wird, sondern nur noch ein Teil der Strahlung zum Detektor gelangt. Der Brechungsindex der Flüssigkristallschicht ist in Zustand 2 idealerweise gleich dem Brechungsindex des Prismas. Durch definierte Änderung der Reflexionseigenschaften der Prisma/Flüssigkristall-Grenzschicht kann die Amplitude des THz-Signals moduliert werden.

Ein solcher erfindungsgemäßer Modulator kann auch als Schalter verwendet werden. Ein solcher erfindungsgemäßer Modulator und / oder Schalter kann beispielsweise in einem THz-Spektrometer oder einem Videoprojektor eingebaut werden. Der Modulator kann als Amplitudenmodulator verwendet werden bzw. ausgeführt sein. Bei dem erfindungsgemäßen Verfahren zur Modulation und / oder Schaltung einer EM-Welle erfolgt die Modulation und / oder Schaltung durch Änderung des Brechungsindex mindestens einer, der sich an der Grenzschicht gegenüberstehenden Komponenten. Eine EM-Welle kann hierbei auch mehrfach hintereinander einem solchen Verfahren zur Modulation und / oder Schaltung ausgesetzt werden.

**Bezugszeichenliste**

Fig. 1: PRINZIPSKIZZE DES SCHALTERS

Fig. 2: SIMULATION FÜR TE- POLARISATION. AUFGETRAGEN IST DIE TRANSMISSION T ALS FUNTION DES WINKELS DES PRISMAS UND DES BRECHUNGSINDEX DES MEDIUMS N3.

Fig. 3: SIMULATION FÜR TM-POLARISATION. AUFGETRAGEN IST DIE TRANSMISSION T ALS FUNTION DES WINKELS DES PRISMAS UND DES BRECHUNGSINDEX DES MEDIUMS N3.

Fig. 4: SCHALTVERHALTEN DES MODULATOR DEMONSTRATORS. DIE SIMULATION IST ALS DURCHGEZOGENE LINIE UND DIE MESSPUNKTE ALS KREISE DARGESTELLT.

Fig. 5: AUSFÜHRUNG DES ELEKTRODENDESIGNS ZUR ANSTEUERUNG DER FLÜSSIGKRISTALLE: AUSSCHALTZUSTAND (1) ABSTANDSHALTER (2) DECKPLATTE (3) ELEKTRODEN (4) FLÜSSIGKRISTALL (5) PRISMA (6) DETEKTOR (7) EMITTER

Fig. 6: AUSFÜHRUNG DES ELEKTRODENDESIGNS ZUR ANSTEUERUNG DER FLÜSSIGKRISTALLE: EINSCHALTZUSTAND (1) ABSTANDSHALTER (2) DECKPLATTE (3) ELEKTRODEN (4) FLÜSSIGKRISTALL (5) PRISMA (6) DETEKTOR (7) EMITTER

Fig. 7: AUSFÜHRUNGSBEISPIEL FÜR EINEN MODULATOR FÜR GEPULSTE TERAHERTZSTRAHLUNG (1) EINGANGSSIGNAL (2) AUSGANGSSIGNAL FÜR SCHALTZUSTAND 1 (3) AUSGANGSSIGNAL FÜR SCHALTZUSTAND 2 (4) FLÜSSIGKRISTALLSCHICHT (5) PRISMA (6) TERAHERTZDETEKTOR (7) TERAHERTZEMITTER

Fig. 8: AUSFÜHRUNGSBEISPIEL FÜR EINEN RÄUMLICHEN MODULATOR MIT PIXEL STRUKTUR

8-1 Pixel der variabel-einstellbaren Flüssigkristallschicht

8-2 Prisma

8-3 EM-Welle

Fig. 9: FLÜSSIGKRISTALLDATEN FÜR 5CB, BRECHUNGSINDEX FÜR ORDENTLICHE UND AUSSERORDENTLICHE POLARISATION

**Patentansprüche**

1. Ein Modulator zur Modulation elektromagnetischer Strahlung, **dadurch gekennzeichnet, dass** dieser aus mindestens zwei aneinandergrenzenden Komponenten besteht, wobei mindestens eine erste Komponente ein Medium mit einem variabel-einstellbaren komplexen Brechungsindex aufweist und der Brechungsindex einer zweiten Komponente derart ausgeführt ist, dass mindestens in einem Zustand der Komponenten zueinander die Bedingung für Totalreflexion an der Grenzschicht zwischen der ersten und zweiten Komponente erfüllt ist und in mindestens einem anderen Zustand der Komponenten diese Bedingung nicht erfüllt ist.

2. Ein Modulator nach Anspruche 1, **dadurch gekennzeichnet, dass** die erste Komponente als Flüssigkristall (engl. Liquid Crystal - LC) ausgeführt ist.

3. Ein Modulator nach einem der Ansprüche 1 bis 2, **dadurch gekennzeichnet, dass** die zweite Komponente in Form eines Prismas, eines Halbzylinders oder einer Halbkugel ausgeführt ist.

4. Ein Modulator nach einem der Ansprüchen 1 bis 3, **dadurch gekennzeichnet, dass** der Brechungsindex der ersten Komponente und / oder weiterer Komponenten mit variabel-einstellbarem komplexen Brechungsindex elektrisch und / oder optisch und / oder magnetisch und / oder elektro-magnetisch und / oder mechanisch und / oder thermisch und / oder akustisch und / oder biologisch schaltbar ist.

5. Ein Modulator nach einem der Ansprüche 1 bis 4, **dadurch gekennzeichnet, dass** Teilbereiche (z.B.

Pixel) der ersten Komponente separat einstellbar sind.

6. Ein Modulator nach einem der Ansprüchen 1 bis 5, **dadurch gekennzeichnet, dass** die zweite Komponente aus Glas, Saphir, Quarz, einem Polymer, einer Keramik oder einem Halbleiter besteht oder teilweise aus mindestens einem dieser Medien besteht.

7. Ein Modulator nach einem der Ansprüche 1 bis 6, **dadurch gekennzeichnet, dass** die erste Komponente ein Ferroelektrikum oder ein pyroelektrisches Material aufweist.

8. Ein Modulator nach einem der Ansprüche 1 bis 7, **dadurch gekennzeichnet, dass** dieser geeignet ausgeführt ist, um elektromagnetische Wellen mit Frequenzen im Terahertzbereich (100 GHz — 30 THz) zu modulieren.

9. Ein Schalter aufweisend einen Modulator nach einem der Ansprüche 1 bis 8.

10. Ein THz-Spektrometer aufweisend einen Modulator nach einem der Ansprüche 1 bis 9.

11. Ein Videoprojektor aufweisend einen Modulator nach einem der Ansprüche 1 bis 10.

12. Ein Amplitudenmodulator nach einem der Ansprüche 1 bis 11.

13. Ein Verfahren zur Modulation und / oder Schaltung einer elektromagnetischen Welle, wobei die Modulation und / oder Schaltung durch Änderung des Brechungsindex mindestens einer, der sich an der Grenzschicht gegenüberstehenden Komponenten, erfolgt.

14. Verfahren zur Modulation und / oder Schaltung wobei die EM-Welle mehrfach einem Verfahren gemäß Anspruch 13 ausgesetzt wird..

Fig. 1

Fig. 2

Fig. 3

Fig. 4

Fig. 5

Fig. 6

Fig. 7

Fig. 8

Fig. 9

Europäisches
Patentamt

European
Patent Office

Office européen
des brevets

# EUROPÄISCHER RECHERCHENBERICHT

Nummer der Anmeldung

EP 11 19 0046

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | SKINNER J ET AL: "A LOW-CROSSTALK MICROOPTIC LIQUID CRYSTAL SWITCH", IEEE JOURNAL ON SELECTED AREAS IN COMMUNICATIONS, IEEE SERVICE CENTER, PISCATAWAY, US, Bd. 6, Nr. 7, 1. August 1988 (1988-08-01), Seiten 1178-1185, XP000008107, ISSN: 0733-8716, DOI: 10.1109/49.7838 | 1-6,9, 11-14 | INV. G02F1/13 G02F1/315 ADD. G02F1/1343 |
| Y | * das ganze Dokument * ----- | 8,10 | |
| Y | RAFAL WILK ET AL: "Liquid crystal based electrically switchable Bragg structure for THz waves", OPTICS EXPRESS, Bd. 17, Nr. 9, 27. April 2009 (2009-04-27) , Seite 7377, XP55018727, ISSN: 1094-4087, DOI: 10.1364/OE.17.007377 * das ganze Dokument * ----- | 8,10 | |
| Y | NICO VIEWEG ET AL: "THz Properties of Nematic Liquid Crystals", JOURNAL OF INFRARED, MILLIMETER, AND TERAHERTZ WAVES, SPRINGER US, BOSTON, Bd. 31, Nr. 11, 28. September 2010 (2010-09-28), Seiten 1312-1320, XP019819762, ISSN: 1866-6906 * das ganze Dokument * ----- | 8,10 | |
| X | EP 0 124 622 A1 (MATSUSHITA ELECTRIC IND CO LTD [JP]) 14. November 1984 (1984-11-14) | 1,3,4,6, 7,11 | |
| Y | * Seite 2, Zeile 12 - Seite 4, Zeile 7 * * Seite 6, Zeile 28 - Seite 7, Zeile 4 * ----- -/-- | 8,10 | |

**RECHERCHIERTE SACHGEBIETE (IPC)**

G02F

Der vorliegende Recherchenbericht wurde für alle Patentansprüche erstellt

| Recherchenort | Abschlußdatum der Recherche | Prüfer |
|---|---|---|
| München | 10. Februar 2012 | Ammerlahn, Dirk |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

...............................................................................
& : Mitglied der gleichen Patentfamilie, übereinstimmendes
Dokument

EPO FORM 1503 03.82 (P04C03)

EP 2 597 509 A1

Europäisches Patentamt
European Patent Office
Office européen des brevets

**EUROPÄISCHER RECHERCHENBERICHT**

Nummer der Anmeldung

EP 11 19 0046

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | KUZEL P ET AL: "Tunable structures and modulators for THz light", COMPTES RENDUS - PHYSIQUE, ELSEVIER, PARIS, FR, Bd. 9, Nr. 2, 1. März 2008 (2008-03-01), Seiten 197-214, XP022616303, ISSN: 1631-0705, DOI: 10.1016/J.CRHY.2007.07.004 [gefunden am 2008-01-09] * das ganze Dokument * | 8,10 | |
| A | FEDERICI JOHN ET AL: "Review of terahertz and subterahertz wireless communications", JOURNAL OF APPLIED PHYSICS, AMERICAN INSTITUTE OF PHYSICS. NEW YORK, US, Bd. 107, Nr. 11, 9. Juni 2010 (2010-06-09), Seiten 111101-111101, XP012132780, ISSN: 0021-8979, DOI: 10.1063/1.3386413 * section V. B * | 1-14 | |
| A | GHATTAN Z ET AL: "Sub-terahertz on-off switch based on a two-dimensional photonic crystal infiltrated by liquid crystals", OPTICS COMMUNICATIONS, NORTH-HOLLAND PUBLISHING CO. AMSTERDAM, NL, Bd. 281, Nr. 18, 15. September 2008 (2008-09-15), Seiten 4623-4625, XP023612946, ISSN: 0030-4018, DOI: 10.1016/J.OPTCOM.2008.05.041 [gefunden am 2008-06-12] * das ganze Dokument * | 1-14 | RECHERCHIERTE SACHGEBIETE (IPC) |

Der vorliegende Recherchenbericht wurde für alle Patentansprüche erstellt

| Recherchenort | Abschlußdatum der Recherche | Prüfer |
|---|---|---|
| München | 10. Februar 2012 | Ammerlahn, Dirk |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

13

**ANHANG ZUM EUROPÄISCHEN RECHERCHENBERICHT
ÜBER DIE EUROPÄISCHE PATENTANMELDUNG NR.**

EP 11 19 0046

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

10-02-2012

| Im Recherchenbericht angeführtes Patentdokument | Datum der Veröffentlichung | Mitglied(er) der Patentfamilie | Datum der Veröffentlichung |
|---|---|---|---|
| EP 0124622 A1 | 14-11-1984 | DE 3382151 D1 | 07-03-1991 |
| | | EP 0124622 A1 | 14-11-1984 |
| | | JP 1787930 C | 10-09-1993 |
| | | JP 4073129 B | 20-11-1992 |
| | | JP 59087436 A | 21-05-1984 |
| | | US 4796982 A | 10-01-1989 |
| | | WO 8402010 A1 | 24-05-1984 |

EPO FORM P0461

Für nähere Einzelheiten zu diesem Anhang : siehe Amtsblatt des Europäischen Patentamts, Nr.12/82